Europäisches Patentamt

European Patent Office

Office européen des brevets

(19)

(11) **EP 0 754 205 B1**

(12) **FASCICULE DE BREVET EUROPEEN**

(45) Date de publication et mention
de la délivrance du brevet:
**17.07.2002 Bulletin 2002/29**

(21) Numéro de dépôt: **96902312.6**

(22) Date de dépôt: **30.01.1996**

(51) Int Cl.⁷: **C08L 95/00**

(86) Numéro de dépôt international:
**PCT/FR96/00159**

(87) Numéro de publication internationale:
**WO 96/23840 (08.08.1996 Gazette 1996/36)**

(54) **COMPOSITIONS DE BITUMES**

BITUMENZUSAMMENSETZUNGEN

BITUMEN COMPOSITIONS

(84) Etats contractants désignés:
**AT BE CH DE DK ES FR GB GR IE IT LI LU NL PT SE**

(30) Priorité: **30.01.1995 JP 1275795**
**30.01.1995 JP 1275895**

(43) Date de publication de la demande:
**22.01.1997 Bulletin 1997/04**

(73) Titulaires:
• **Atofina**
**92800 Puteaux (FR)**
• **Eurovia**
**92500 Rueil-Malmaison (FR)**

(72) Inventeurs:
• **MAILLET, Jérôme KRP Résidence 115**
**Kyoto 600 (JP)**
• **KOMORNICKI, Jacques**
**Ashiya-shi Hyogo 659 (JP)**
• **MIYAKI, Yoshiyuki**
**Otsu Shiga 520-21 (JP)**

• **MOHRI, Hiroshi**
**Noda-shi Chiba 278 (JP)**
• **SHIOJIRI, Kentaro**
**Tokyo 156 (JP)**
• **TADA, Satoshi**
**Yokohama-shi Kanagawa 245 (JP)**
• **PERRET, Patrice**
**F-27470 Serquigny (FR)**
• **GAZEAU, Sabine**
**F-75014 Paris (FR)**
• **BRULE, bernard**
**F-93800, Epinay sur Seine (FR)**

(74) Mandataire: **Ahner, Francis**
**Cabinet Régimbeau**
**20, rue de Chazelles**
**75847 Paris cedex 17 (FR)**

(56) Documents cités:
**US-A- 5 306 750**       **US-A- 5 331 028**

• **PATENT ABSTRACTS OF JAPAN vol. 11, no. 53 (C-404) & JP,A,61 215658 (DAIYU KENSETSU K.K.), 25 September 1986,**

**Description**

La présente invention concerne des compositions de bitumes. Les bitumes sont utiles comme matériaux d'étanchéité ou pour recouvrir les routes mais ils sont souvent trop durs en hiver et trop fluides en été. De plus, les revêtements doivent résister à la fissuration à l'omierage et les bitumes présentent une absence de gélification ; il est aussi important que les bitumes soient stables au stockage.

L'art antérieur a déjà proposé des bitumes modifiés par différents additifs.

On connaît les résines epoxy, les polyuréthanes les caoutchoucs, les élastomères thermoplastiques et les résines thermoplastiques. Les résines epoxy cependant ne sont pas assez flexibles, ce qui provoque des fissures et une faible résistance aux intempéries ; par contre, elles apportent une bonne résistance mécanique et une résistance aux alcalins. Les polyuréthanes ont une excellente élasticité mais ne résistent pas aux intempéries et aux produits chimiques et demandent un temps de réticulation trop long, ce qui est un problème difficile dans le revêtement des routes.

US 5 306 750 décrit des bitumes modifiés avec des polymères ayant des groupes (méth)acrylate de glycidyle. On peut obtenir une stabilité au stockage mais la viscosité est trop élevée quand la teneur en polymère dépasse 3 %, la gélification empêche la mise en oeuvre.

Les modifiants du type caoutchouc peuvent être des latex ou des poudres de SBR (styrène butadiène rubber), de NR (natural rubber) et SIR (styrène isoprène rubber). C'est décrit dans les brevets JP-B-4024034, JP-B-433120, JP-B-5423691 et JP-A-17618. Les élastomères thermoplastiques peuvent être des copolymères blocs tels que les SBS (styrène butadiène styrène), SIS (styrène isoprène styrène) et SEBS (SBS hydrogéné) tels que décrits dans JP-B-59-13098. Les résines thermoplastiques peuvent être de l'EVA (copolymère éthylène - acétate de vinyle), des EEA (copolymères éthylène - acrylate d'éthyle), du polyéthylène ou du polypropylène tels que décrits dans JP-B-60 47403, JP-B-1-15642 et JP-A-63 304059.

Les modifiants sont généralement utilisés en proportion de 3 à 7% en poids du bitume. Cependant, la proportion doit être plus élevée si on veut une meilleure viscosité ; par contre ceci entraîne une séparation de phase du bitume modifié c'est-à-dire du mélange de bitume et de modifiant pendant le transport ou le stockage à haute température. Il en résulte un produit inhomogène ou une baisse de la fluidité à l'état fondu.

Les autres modifiants connus sont des epoxy thermoplastiques décrits dans JP-A-503543, JP-A-6116500 et JP-A-6-116333 et des combinaisons de polymères ayant des groupes glycidyle avec des élastomères styréniques tels que décrits dans US-5 331 028. Toutefois, ces bitumes modifiés ne sont pas assez stables au stockage. Les bitumes modifiés de la présente invention sont stables au stockage et présentent une absence de gélification bien que la viscosité ait été augmentée. Les revêtements résistent à la fissuration et à l'omiérage. Les bitumes modifiés de l'invention comprennent en poids:

(A) 100 parties de bitume
(B) 0,1 à 10 parties d'un copolymère d'une alpha oléfine, d'un époxyde insaturé et d'un ester d'acide carboxylique insaturé
(C) 0,1 à 10 parties d'un copolymère d'une alpha oléfine et d'un ester d'acide carboxylique insaturé.

Le bitume (A) peut être naturel ou de synthèse, par exemple les bitumes pour revêtement de routes, les bitumes naturels, le bitume semi-soufflé, le bitume partiellement modifié avec du bitume soufflé ou toutes leurs combinaisons.

La viscosité de (A) à 60°C est par exemple comprise entre 10 et 20000 poises ($10^{-1}$.Pa.s) de préférence, 300 à 5000 poises ($10^{-1}$.Pa.s).

(B) est un copolymère d'une alpha oléfine comprenant au moins un époxyde insaturé et au moins un ester d'acide carboxylique insaturé.

L'époxyde insaturé peut être choisi parmi :

- les esters et éthers de glycidyle aliphatiques tels que l'allyiglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

Avantageusement, on utilise le (méth)acrylate de glycidyle.

L'ester d'acide carboxylique insaturé peut être par exemple un (méth)acrylate d'alkyle, le groupement alkyle pouvant avoir jusqu'à 24 atomes de carbone.

Des exemples d'acrylate ou méthacrylate d'alkyle utilisables sont notamment le méthacrylate de méthyle, l'acrylate d'éthyle, l'acrylate de n-butyle, l'acrylate d'isobutyle, l'acrylate de 2-éthylhexyle.

L'alpha oléfine peut être l'éthylène, le propylène, le butène-1, l'isobutène, le pentène-1, l'hexène-1, le décène-1, le 4-méthylbutène-1, le 4-méthyl pentène, le 4,4-dimèthylpentène-1, le vinylcyclohexane, le styrène, le méthylstyrène, le styrène substitué avec des alkyls. Avantageusement, on utilise l'éthylène.

L'époxyde insaturé peut être greffé ou copolymérisé avec l'alpha oléfine et l'ester d'acide carboxylique insaturé. On préfère la copolymérisation.

Avantageusement, (B) est un copolymère éthylène/(méth)acrylate d'alkyle/(méth)acrylate de glycidyle, ayant jusqu'à 65% en poids de (méth)acrylate d'alkyle dont l'alkyle a de 1 à 10 carbones et jusqu'à10% en poids d'époxyde.

De préférence, le (méth)acrylate d'alkyle est 9 à 40% de (B) et l'époxyde 0,1 à 8%.

Quant à (C), l'alpha oléfine et l'ester d'acide carboxylique insaturé peuvent être choisis parmi les même produits déjà cités pour (B).

Avantageusement, (C) est un copolymère éthylène / (méth)acrylate d'alkyle dont l'alkyle a de 1 à 10 atomes de carbone et contenant jusqu'à 65% en poids de (méth)acrylate.

De préférence, le méthacrylate est de 9 à 40% en poids de (C).

Avantageusement, la quantité de (C) est comprise entre 4 et 10 parties, de préférence 7 à 10.

Avantageusement, la quantité de (B) est comprise entre 0,5 et 4 et, de préférence, 1 à 3 parties.

Avantageusement, la quantité de (C) est 3 à 4 fois la quantité de (B).

On ne sortirait pas du cadre de l'invention en ajoutant 0 à 10 parties d'un élastomère thermoplastique (D) n'ayant essentiellement pas de fonctions réactives telles que des acides ou des anhydrides.

(D) peut être choisi parmi :

- les polyoléfines élastomères telles que les éthylène/butène, les polybutènes, les éthylène/propylène, et les éthylène/diènes
- les élastomères diènes tels que les blocs styrène-butadiène-styrène (SBS), les blocs styrène-isoprène-styrène, les blocs styrène-butadiène, le polybutadiène, le transpolyisoprène et les styrènes-éthylène-butadiène-styrène
- les élastomères acryliques tels que les sels des copolymères éthylène - acide (méth)acrylique avec des métaux tels que Na, K, Zn, Ca et Mg
- les polyamides élastomères tels que les copolymères à blocs polyamides et blocs polyéther
- les polyesters élastomères tels que les copolymères ayant des motifs polyéther (polytétraméthylène glycol) et des motifs rigides dérivés des diacides aromatiques et de l'éthylène glycol ou du butanediol,1-4.

De préférence, (D) est un SBS.

Les compositions de l'invention peuvent aussi comprendre 0 à 10 parties d'un polymère (E) réactif avec (B).

(E) peut être choisi parmi les copolymères de l'éthylène, du propylène, du butylène et du 4-méthylpentène-1 ou des polystyrènes homo ou copolymères, ces copolymères comprenant un ou des acides carboxyliques insaturés, leurs anhydrides ou leurs dérivés. De préférence, (E) est une polyalphaoléfine homo ou copolymère greffée ou copolymérisée avec un acide carboxylique insaturé, un anhydride d'acide carboxylique insaturé ou leurs dérivés.

Les fonctions, greffées ou copolymérisées, représentent 0,2 à 10% en poids de (E) et de préférence 0,3 à 3%.

Les compositions de l'invention peuvent aussi comprendre 0 à 10 parties d'un copolymère (F) éthylène/acétate de vinyle. La quantité d'acétate de vinyle peut être en poids jusqu'à 75% du copolymère (F).

La demanderesse a aussi trouvé que des combinaisons particulières du copolymère (B) ou d'un copolymère (B1) d'une alpha oléfine et d'un époxyde insaturé tel que (B1) et différent de (B) avec des produits choisis parmi (C), (D), (E) et (F) permettaient aussi d'améliorer les bitumes.

L'alpha oléfine et l'époxyde insaturé de (B1) sont choisis parmi les mêmes que ceux de (B). (B1) peut comprendre aussi au moins un ester vinylique d'acide carboxylique saturé, tel que l'acétate de vinyle ou le propionate de vinyle. Les quantités d'époxyde sont les mêmes que celles de (B). Les quantités d'ester vinylique d'acide carboxylique saturé sont les mêmes que celles d'ester d'acide carboxylique de (B).

La présente invention concerne donc aussi des bitumes modifiés comprenant

    (A) 100 parties de bitume
    (B) et/ou (B1) 0,5 à 4 parties
    (D) 2 à 6 parties
    (C) et/ou (F) 0,5 à 5 parties.

La présente invention concerne aussi des bitumes modifiés comprenant :

    (A) 100 parties de bitume
    (B) et/ou (B1) 0,5 à 4 parties

(E) 0,5 à 4 parties
(D) 2 à 6 parties
(C) et/ou (F) 0,5 à 5 parties.

Les compositions de bitume de l'invention peuvent contenir un catalyseur qui accélère la réaction entre l'époxyde et les fonctions du bitume. On peut utiliser des amines tertiaires ou des composés organométalliques. Les amines peuvent être la triméthylamine, la benzylméthylamine, l'alphaméthylbenzyldiméthylamine, le diméthylaminométhylphénol, la stéaryldiméthylamine, la triéthanolamine, le tri(hydroxyméthyl)aminométhane, le tris(diméthylaminométhyl)phénol, la s-triazine et le triallylcyanurate. Les composés organométalliques peuvent être l'octanate de plomb, le naphténate de plomb, le tétra-sec.butyltitanate, l'octanate d'étain et le stéarate de zinc.

### *Exemples*

On désigne par EBA 30/02 un copolymère éthylène / acrylate de butyle à 30 % en poids d'acrylate de MFI 2 et par EBA 35/40 un copo éthylène acrylate de butyle à 35 % en poids d'acrylate de MFI 40.
On désigne par terpo E/EA/GMA un copolymère éthylène/acrylate d'éthyle/méthacrylate de glycidyle (GMA) à 24 % en poids d'acrylate, 8 % en poids de GMA et de MFI 6.
PENE désigne la pénétration d'une aiguille en 1/10 mm à 25° C selon NFT 66004.
TBA désigne la température de ramollissement bille anneau selon NFT 66008.

IP Pfeiffer désigne l'indice de pénétrabilité

$$= (\log_{10} 800 - \log_{10} PENE) / (TBA- 25)$$

**T.ISO** est la température à laquelle le module de cisaillement dynamique $G^* / Sin \delta$ est de 1 k Pa.
$\delta$ correspond à l'angle de phase entre la composante élastique G' et la composante visqueuse G".

Programme SH/RP Méthode d'essai et spécification des liants DAVID A. ANDERSON. Revue générale des routes et aérodromes no 714 Janvier 94 p. 48-52.
La démixtion signifie la séparation de phases observée après un stockage à hautes températures ou les phases supérieures et inférieures présentent une micromorphologie différence souvent associée à une différence de TBA d'au moins 5° C.
% démixtion désinge le rapport de la masse de bitume sur la masse de l'échantillon, ledit échantillon ayant subi un stockage à 165° C pendant 5 jours dans un tube en aluminium (ex. 1 et 2).
TBA haut désigne la température de ramollissement bille anneau de la phase supérieure (NF 66008) après un essai de démixtion.
TBA bas désigne celle de la phase inférieure.

### *Exemple 1*

On a ajouté des polymères (B), (C) et (B) + (C) dans du bitume ...
Les résultats figurent sur le tableau 1.

## Tableau 1

| | 3% Terpo E/AE/GMA | 10% EBA 30/02 | 9% EBA 30/02 1% Terpo E/EA/GMA | 8% EBA 30/02 2% Terpo E/EA/GMA | 7% EBA 30/02 3% Terpo E/EA/GMA | 4,9% EBA 30/02 2,1% Terpo E/EA/GMA | 10% EBA 35/40 | 7% EBA 35/40 3% Terpo E/EA/GMA |
|---|---|---|---|---|---|---|---|---|
| PENE | 72 | 46 | 44 | 40 | 43 | 45 | 61 | 63 |
| TBA | 54 | 70,5 | 71 | 72 | 74 | 68 | 58,5 | 66 |
| IP Pfeiffer | 0,7 | 2,76 | 2,66 | 2,58 | 2,36 | 2,23 | 1,24 | 2,79 |
| T.ISO | 73 | 94 | 95 | 94 | 94 | 84 | 71 | 86 |
| % DEMIXTION TBA HAUT TBA BAS | OUI (42%) | OUI | TRÈS FAIBLE: 92% Haut: 70    Bas: 77 | 8% Haut: 74   Bas: 74 | 8% | Haut:72    Bas:74 | OUI (33%) | NON 0% |

EP 0 754 205 B1

## Exemple 2

On opère comme dans l'Exemple 1 avec deux bitumes différents :

- un bitume NYNAS 70/100 de pénétration à 25° C 70/100-1/10 mm
- un bitume ELF de pénétration à 25° C 70/100 1/10 mm/.

Les résultats sont sur le Tableau 2.

Tableau 2

| BITUME | NYNAS 70/100 | ELF | NYNAS 70/100 | ELF |
|---|---|---|---|---|
| | 10% EBA 35/40 | 10% EBA 35/40 | 7% EBA 35/40 3% Terpo E/EA/GMA | 7% EBA 35/40 3% Terpo E/EA/GMA |
| PENE | 61 | 65 | 63 | 59 |
| TBA | 58,5 | 64 | 66 | 68 |
| IP Pfeiffer | 1,24 | 2,51 | 2.79 | 2,95 |
| T.ISO | 71 | 78 | 86 | 83 |
| % DEMIXTION | OUI (33%) | OUI (39%) | NON 0% | NON 0% |
| 140°C Viscosité (mPa.s) 160°C 180°C | 2200 930 450 | 2260 955 470 | 9500 4000 1480 | 7700 4200 |

Dans les exemples suivants, on évalue les propriétés des bitumes par les tests suivants :

Wheel tracking test : test de stabilité selon la méthode de test des revêtements de route publié par la JAPAN ROAD ASSOCIATION, indique directement la résistance au fluage du revêtement et les ornières faites par les véhicules lourds. Dans ce test, le bitume est mélangé avec une charge pour préparer un échantillon moulé (30 x 30 x 5 cm) et une roue solide de 20 cm de diamètre roule sur la surface sous une charge de 6,4 kg/cm$^2$ pour déterminer le nombre de passages jusqu'à obtenir une déformation de 1 mm.

Stabilité à haute température : un échantillon de bitume est introduit dans un tuyau d'aluminium de diamètre 5 cm et hauteur 50 cm et est laissé 3 jours à 170°C. Puis le tuyau est coupé à température ambiante pour obtenir deux échantillons du haut et du bas et déterminer le point de ramollissement, la pénétration d'aiguille et l'extension (à 15°C).

## Exemple 3

A 100 parties de bitume de revêtement (pénétration 60/80) chauffé à 180°C, on ajoute en 2 heures (% en poids) :

- 1 partie d'un copolymère éthylène (70%) / acrylate de butyle (27%) / et méthacrylate de glycidyle (3%)
- 4 parties d'un copolymère bloc styrène butadiène styrène (SBS (KRATON 1101 de SHELL)
- 1 partie d'un copolymère éthylène acétate de vinyle (EVA) à 28% d'acétate de MFI 150.

Les résultats sont sur le Tableau 3. Ils montrent l'amélioration du bitume et la stabilité à température élevée après 3 jours.

## Exemple 4

On opère comme dans l'Exemple 3, mais 1 partie d'EVA est remplacée par un copolymère éthylène / acrylate de butyle à 35% d'acrylate de MFI 320.
La composition obtenue est stable.

### Exemple 5

On opère comme dans l'Exemple 3, mais 1 partie de copolymère éthylène / acrylate de butyle à 35% d'acrylate est ajoutée.

La composition de bitume est améliorée.

### Exemple 6

On opère comme dans l'Exemple 3, mais 1 partie de l'EVA est remplacée par 1 partie de polypropylène (APPRYL 3020 d'ELF ATOCHEM).

La composition de bitume est améliorée.

### Exemple Comparatif 1

Dans 100 parties de bitume pour revêtement (pénétration : 60/80) chauffé à 180°C, on ajoute à 180°C en 2 heures 2 parties de KRATON 1101 (SBS de l'Exemple 3).

Le bitume obtenu a un point de ramollissement plus bas et est peu stable, il y a une grande différence entre les portions hautes et basses.

### Exemple Comparatif 2

Dans 100 parties de bitume de revêtement (pénétration : 60/80) chauffé à 180°C, on ajoute 2 parties du copolymère éthylène/acrylate/GMA de l'Exemple 3 en deux heures.

Le bitume montre un point de ramollissement plus bas et une plus faible extension.

### Exemple Comparatif 3

On répète l'Exemple Comparatif 1, mais 2 parties de copolymère éthylène/acrylate/GMA de l'Exemple 3 sont ajoutées.

Le bitume montre un point élevé de ramollissement, mais des particules de gel après 3 jours de stockage à 170°C.

### Exemple Comparatif 4

On répète l'Exemple Comparatif 3, mais on ajoute 1 partie du copolymère éthylène/acrylate/GMA de l'Exemple 3 et 8 parties du SBS de l'Exemple 3.

Le bitume montre une mauvaise tenue au stockage. Les propriétés de la partie haute et de la partie basse sont très différentes.

### Exemple Comparatif 5

Dans 100 parties de bitume de revêtement (pénétration : 60/80) chauffé à 180°C, on ajoute en 2 heures à 180°C :

- 4 parties de SBS de l'Exemple 3
- 2 parties d'EVA de l'Exemple 3
- 1 partie d'un copolymère éthylène/acrylate d'éthyle/anhydride maléique (MAH) à 28,5% d'acrylate et 1,5% de MAH.

Le bitume a de bonnes propriétés initiales, mais n'est pas stable au stockage.

Tableau 3

| | Exemple | | | | | Exemple Comparatif | | | | |
|---|---|---|---|---|---|---|---|---|---|---|
| | 3 | 4 | 5 | 6 | bitume brut | 1 | 2 | 3 | 4 | 5 |
| **Valeurs initiales** | | | | | | | | | | |
| Point de ramollissement (°C) | 80 | 76 | 89 | 75 | 50 | 61 | 54 | 81 | 97 | 72 |
| Pénétration d'aiguille (1/10 mm) | 39 | 37 | 37 | 38 | 51 | 38 | 62 | 37 | 34 | 40 |
| Extension (15°C) (cm) | 73 | 68 | 52 | 59 | 120+ | 54 | 13 | 62 | 71 | 103 |
| Viscosité à 135°C (cP) ou (mPa.s) | 2180 | 1840 | 3020 | 1980 | 360 | 1440 | 1100 | 2170 | 5000 | 2200 |
| Stabilité dynamique (fois/mm) | 9500 | 9100 | 9300 | 10500 | 770 | 3200 | -- | 7500 | -- | 8200 |
| **Après 3 jours à 170°C, portion haute** | | | | | | | | | | |
| Point de ramollissement (°C) | 95 | 85 | 100 | 102 | -- | 93 | 56 | -- | 100+ | 87 |
| Pénétration d'aiguille (1/10 mm) | 55 | 51 | 45 | 58 | -- | 51 | 62 | -- | 78 | 93 |
| Extension (15°C) (cm) | 85 | 75 | 70 | 78 | -- | 100+ | 15 | -- | 100+ | 100+ |
| **Après 3 jours à 170°C, portion basse** | | | | | | | | | | |
| Point de ramollissement (°C) | 70 | 71 | 75 | 60 | -- | 50 | 51 | -- | 65 | 70 |
| Pénétration d'aiguille (1/10 mm) | 36 | 34 | 40 | 35 | -- | 30 | 61 | -- | 25 | 21 |
| Extension (15°C) (cm) | 40 | 47 | 48 | 359 | -- | 25 | 13 | -- | 10 | 0 |

EP 0 754 205 B1

8

### Exemple 7

Dans 100 parties de bitume de revêtement (pénétration 60/80) chauffé à 180°C, on ajoute en 2 heures à 180°C :

- 2 parties du copolymère éthylène/acrylate /GMA de l'Exemple 3
- 1 partie d'un polypropylène greffé MAH à 0,3% en poids de MAH de point VICAT 135°C et MFI 4 (230°C - 2,16 kg)
- 4 parties de KRATON 1101, SBS de l'Exemple 3.

Le Tableau 4 montre une amélioration du bitume et une stabilité au stockage.

### Exemple 8

On opère comme dans l'Exemple 7, mais le polypropylène greffé a été remplacé par un autre polypropylène greffé à 1% En poids de MAH ayant un point VICAT de 146°C et un MFI de 40 (190°C - 325 g).
Le bitume est amélioré.

### Exemple 9

Dans 100 parties de bitume de revêtement (pénétration : 60/80) chauffé à 180°C, on ajoute à 180°C en 2 heures :

- 1 partie du copolymère éthylène/acrylate/GMA de l'Exemple 3
- 1 partie d'un polypropylène greffé à 0,1 de MAH ayant un point VICAT de 122°C et un MFI de 4 (à 230°C - 2,16 kg)
- 4 parties de KRATON (SBS) de l'exemple 3
- 2 parties d'un copolymère éthylène/acrylate de butyle à 35 % en poids d'acrylate.

Le bitume est amélioré et la viscosité décroît.

### Exemple 10

On répète l'Exemple 9, mais en utilisant le produit greffé de l'Exemple 8 au lieu de celui de l'Exemple 9.
Le bitume a une basse viscosité à l'état fondu.

### Exemple 11

On opère comme dans l'Exemple 9, mais le produit greffé est remplacé par un autre greffé qui est un EVA à 28% d'acétate greffé à 1% de MAH. Le point VICAT est de 57°C et le MFI 6 (190°C - 2,16 kg).
Le bitume montre une viscosité peu élevée, une basse stabilité dynamique.

### Exemple 12

Dans 100 parties de bitume de revêtement (pénétration : 150/20) chauffé à 180°C, on ajoute en 2 heures à 180°C :

- 2 parties du copolymère éthylènelacrylate/GMA de l'exemple 3
- 1 partie du produit greffé de l'Exemple 7
- 4 parties de SBS (KRATON 1101 de l'Exemple 3).

Le bitume est amélioré et est stable après stockage à température élevée 3 jours.

Tableau 4

| | Exemple | | | | | |
|---|---|---|---|---|---|---|
| | 7 | 8 | 9 | 10 | 11 | 12 |
| Valeurs initiales | | | | | | |
| Point de ramollissement (°C) | 77 | 71 | 72 | 74 | 80 | 67 |

Tableau 4   (suite)

| | Exemple | | | | | |
|---|---|---|---|---|---|---|
| | 7 | 8 | 9 | 10 | 11 | 12 |
| Valeurs initiales | | | | | | |
| Pénétration d'aiguille (1/10 mm) | 35 | 34 | 37 | 38 | 36 | 75 |
| Extension (15°C) (cm) | 38 | 42 | 56 | 62 | 54 | 49 |
| Viscosité à 135°C (cP) ou ('mPa.s) | 4930 | 3720 | 2120 | 2620 | 4200 | 2020 |
| Stabilité dynamique (fois/mm) | 13700 | 11400 | 9500 | 9800 | 8500 | 4700 |
| Après 3 jours à 170°C, portion haute | | | | | | |
| Point de ramollissement (°C) | 79 | 76 | 85 | 75 | 90 | 75 |
| Pénétration d'aiguille (1/10 mm) | 36 | 35 | 44 | 39 | 46 | 72 |
| Extension (15°C) (cm) | 56 | 62 | 65 | 66 | 69 | 41 |
| Après 3 jours à 170°C, portion basse | | | | | | |
| Point de ramollissement (°C) | 69 | 65 | 65 | 69 | 75 | 70 |
| Pénétration d'aiguille (1/10 mm) | 35 | 33 | 30 | 40 | 37 | 73 |
| Extension (15°C) (cm) | 44 | 41 | 30 | 49 | 35 | 45 |

**Revendications**

1. Compositions de bitumes comprenant en poids:

   (A) 100 parties de bitume,
   (B) 0,1 à 10 parties d'un copolymère d'une alpha oléfine, d'un époxyde insaturé et d'un ester d'acide carboxylique insaturé,
   (C) 0,1 à 10 parties d'un copolymère d'une alpha oléfine et d'un ester d'acide carboxylique insaturé.

2. Compositions selon la revendication 1, dans lesquelles (B) est un copolymère éthylène/(méth)acrylate d'alkyle/ (méth)acrylate de glycidyle, ayant jusqu'à 65% en poids de (méth)acrylate d'alkyle dont l'alkyle a de 1 à 10 carbones et jusqu'à 10% en poids d'époxyde.

3. Compositions selon la revendication 1 ou 2, dans lesquelles (C) est un copolymère éthylène/(méth)acrylate d'alkyle dont l'alkyle a de 1 à 10 carbones et contenant jusqu'à 65% en poids de (méth)acrylate.

4. Compositions selon l'une quelconque des revendications précédentes, dans lesquelles la quantité de (C) est comprise entre 4 à 10 parties, de préférence 7 à 10.

5. Compositions selon l'une quelconque des revendications précédentes, dans lesquelles la quantité de (B) est comprise entre 0,5 à 4 parties et de préférence 1 à 3.

6. Compositions selon l'une quelconque des revendications précédentes, dans lesquelles la quantité de (C) est 3 à 4 fois la quantité de (B).

7. Compositions selon l'une quelconque des revendications précédentes comprenant aussi éventuellement:

   (D) 0 à 10 parties d'un élastomère thermoplastique,
   (E) 0 à 10 parties d'un polymère réactif avec (B),
   (F) 0 à 10 parties d'un copolymère éthylène/acétate de vinyle.

8. Compositions selon la revendication 7, dans lesquelles l'élastomère thermoplastique (D) est un copolymère bloc styrène-butadiène-styrène (SBS).

9. Compositions selon la revendication 7 ou 8, dans lesquelles le polymère réactif (E) réactif avec (B) est une poly-alpha oléfine homo- ou copolymére greffée ou copolymérisée avec un acide carboxylique insaturé, un anhydride d'acide carboxylique insaturé ou leurs dérivés.

10. Compositions de bitume comprenant en poids:

   (A) 100 parties de bitume,
   (B) et/ou (B1) 0,5 à 4 parties,
   (B) désignant un copolymère d'une alpha oléfine, d'un époxyde insaturé et d'un ester d'acide carboxylique insaturé, (B1) désignant un copolymère d'une alpha oléfine et d'un époxyde insaturé et est différent de (B),
   (D) 2 à 6 parties d'un élastomère thermoplastique,
   (C) et/ou (F) 0,5 à 5 parties,
   (C) désignant un copolymère d'une alpha oléfine et d'un ester d'acide carboxylique insaturé, (F) désignant un copolymère éthylène/acétate de vinyle.

11. Compositions de bitume comprenant en poids:

   (A) 100 parties de bitume,
   (B) et/ou (B1) 0,5 à 4 parties, (B) désignant un copolymère d'une alpha oléfine, d'un époxyde insaturé et d'un ester d'acide carboxylique insaturé, (B1) désignant un copolymère d'une alpha oléfine et d'un époxyde insaturé et est différent de (B),
   (E) 0,5 à 4 parties d'un polymère réactif avec (B),
   (D) 2 à 6 parties d'un élastomère thermoplastique,
   (C) et/ou (F) 0,5 à 5 parties; (C) désignant un copolymère d'une alpha oléfine et d'un ester d'acide carboxylique insaturé;
   (F) désignant un copolymère éthylène/acétate de vinyle.

**Patentansprüche**

1. Bitumen-Zusammensetzungen, umfassend bezüglich Gewicht:

   (A) 100 Teile Bitumen,
   (B) 0,1 bis 10 Teile eines Copolymers von einem alpha-Olefin, einem ungesättigten Epoxid und einem ungesättigten Carbonsäureester,
   (C) 0,1 bis 10 Teile eines Copolymers von einem alpha-Olefin und einem ungesättigten Carbonsäureester.

2. Zusammensetzungen nach Anspruch 1, in denen (B) ein Ethylen/Alkyl(meth)acrylat/Glycidyl(meth)acrylat-Copolymer ist, das bis zu 65 Gewichts-% Alkyl(meth)acrylat, dessen Alkyl 1 bis 10 Kohlenstoffe aufweist, und bis zu 10 Gewichts-% Epoxid aufweist.

3. Zusammensetzungen nach Anspruch 1 oder 2, in denen (C) ein Ethylen/Alkyl(meth)acrylat-Copolymer ist, dessen Alkyl 1 bis 10 Kohlenstoffe aufweist und das bis zu 65 Gewichts-% (Meth)acrylat enthält.

4. Zusammensetzungen nach irgendeinem der vorangehenden Ansprüche, in denen die Menge an (C) 4 bis 10, vorzugsweise 7 bis 10 Teile, beträgt.

5. Zusammensetzungen nach irgendeinem der vorangehenden Ansprüche, in denen die Menge an (B) 0,5 bis 4 und vorzugsweise 1 bis 3 Teile beträgt.

6. Zusammensetzungen nach irgendeinem der vorangehenden Ansprüche, in denen die Menge an (C) das 3- bis 4-fache der Menge an (B) ist.

7. Zusammensetzungen nach irgendeinem der vorangehenden Ansprüche, die gegebenenfalls weiter umfassen:

   (D) 0 bis 10 Teile eines thermoplastischen Elastomers,
   (E) 0 bis 10 Teile eines mit (B) reaktiven Polymers,
   (F) 0 bis 10 Teile eines Ethylen/Vinylacetat-Copolymers

**8.** Zusammensetzungen nach Anspruch 7, in denen das thermoplastische Elastomer (D) ein Styrol-Butadien-Styrol-Blockcopolymer (SBS) ist.

**9.** Zusammensetzungen nach Anspruch 7 oder 8, in denen das reaktive Polymer (E), das mit (B) reaktiv ist, ein Poly (alpha-olefin)-Homo- oder -Copolymer ist, das mit einer ungesättigten Carbonsäure, einem ungesättigten Carbonsäureanhydrid oder deren Derivaten gepfropft oder copolymerisiert ist.

**10.** Bitumen-Zusammensetzungen, umfassend bezüglich Gewicht:

(A) 100 Teile Bitumen,
(B) und/oder (B1) 0,5 bis 4 Teile, wobei
(B) ein Copolymer von einem alpha-Olefin, einem ungesättigten Epoxid und einem ungesättigten Carbonsäureester bezeichnet, (B1) ein Copolymer von einem alpha-Olefin und einem ungesättigten Epoxid bezeichnet und von (B) verschieden ist,
(D) 2 bis 6 Teile eines thermoplastischen Elastomers,
(C) und/oder (F) 0,5 bis 5 Teile, wobei
(C) ein Copolymer von einem alpha-Olefin und einem ungesättigten Carbonsäureester bezeichnet, (F) ein Ethylen/Vinylacetat-Copolymer bezeichnet.

**11.** Bitumen-Zusammensetzungen, umfassend bezüglich Gewicht:

(A) 100 Teile Bitumen,
(B) und/oder (B1) 0,5 bis 4 Teile, wobei (B) ein Copolymer von einem alpha-Olefin, einem ungesättigten Epoxid und einem ungesättigten Carbonsäureester bezeichnet, (B1) ein Copolymer von einem alpha-Olefin und einem ungesättigten Epoxid bezeichnet und von (B) verschieden ist,
(E) 0,5 bis 4 Teile eines mit (B) reaktiven Polymers,
(D) 2 bis 6 Teile eines thermoplastischen Elastomers,
(C) und/oder (F) 0,5 bis 5 Teile, wobei (C) ein Copolymer von einem alpha-Olefin und einem ungesättigten Carbonsäureester bezeichnet;
(F) ein EthylenNinylacetat-Copolymer bezeichnet.

**Claims**

**1.** Bitumen compositions including, by weight:

(A) 100 parts of bitumen,
(B) 0.1 to 10 parts of a copolymer of an alpha-olefin, of an unsaturated epoxide and of an ester of unsaturated carboxylic acid,
(C) 0.1 to 10 parts of a copolymer of an alpha-olefin and of an ester of unsaturated carboxylic acid.

**2.** Compositions according to Claim 1, in which (B) is an ethylene/alkyl (meth)acrylate/glycidyl (meth)acrylate copolymer which has up to 65 % by weight of alkyl (meth)acrylate in which the alkyl has from 1 to 10 carbons, and up to 10 % by weight of epoxide.

**3.** Compositions according to Claim 1 or 2, in which (C) is an ethylene/alkyl (meth)acrylate copolymer in which the alkyl has from 1 to 10 carbons and containing up to 65 % by weight of (meth)acrylate.

**4.** Compositions according to any one of the preceding claims, in which the quantity of (C) is between 4 and 10 parts, preferably 7 to 10.

**5.** Compositions according to any one of the preceding claims, in which the quantity of (B) is between 0.5 and 4 parts and preferably 1 to 3.

**6.** Compositions according to any one of the preceding claims, in which the quantity of (C) is 3 to 4 times the quantity of (B).

**7.** Compositions according to any one of the preceding claims, also optionally including:

(D) 0 to 10 parts of a thermoplastic elastomer,
(E) 0 to 10 parts of a polymer which is reactive with (B),
(F) 0 to 10 parts of an ethylene/vinyl acetate copolymer.

8.  Compositions according to Claim 7 in which the thermoplastic elastomer (D) is a styrene-butadiene-styrene (SBS) block copolymer.

9.  Compositions according to Claim 7 or 8 in which the reactive polymer (E) which is reactive with (B) is a poly-alpha-olefin homo- or copolymer grafted or copolymerized with an unsaturated carboxylic acid, an unsaturated carboxylic acid anhydride or derivatives thereof.

10. Bitumen compositions including, by weight:

    (A) 100 parts of bitumen,
    (B) and/or (B1) 0.5 to 4 parts,
    (B) denoting a copolymer of an alpha-olefin, of an unsaturated epoxide and of an ester of unsaturated carboxylic acid, (B1) denoting a copolymer of an alpha-olefin and of an unsaturated epoxide and is different from (B),
    (D) 2 to 6 parts of a thermoplastic elastomer,
    (C) and/or (F) 0.5 to 5 parts,
    (C) denoting a copolymer of an alpha-olefin and of an ester of unsaturated carboxylic acid, (F) denoting an ethylene/vinyl acetate copolymer.

11. Bitumen compositions including, by weight:

    (A) 100 parts of bitumen,
    (B) and/or (B1) 0.5 to 4 parts, (B) denoting a copolymer of an alpha-olefin, of an unsaturated epoxide and of an ester of unsaturated carboxylic acid, (B1) denoting a copolymer of an alpha-olefin and of an unsaturated epoxide and is different from (B),
    (E) 0.5 to 4 parts of a polymer which is reactive with (B),
    (D) 2 to 6 parts of a thermoplastic elastomer,
    (C) and/or (F) 0.5 to 5 parts, (C) denoting a copolymer of an alpha-olefin and of an ester of unsaturated carboxylic acid,
    (F) denoting an ethylene/vinyl acetate copolymer.